# EUROPEAN PATENT SPECIFICATION

(11) **EP 1 898 580 B1**
(45) Date of publication and mention of the grant of the patent: **09.11.2011**
(21) Application number: 07764142.1
(22) Date of filing: 29.06.2007
(51) Int. Cl.: H04L 12/66, H04L 29/06

(54) **METHOD, DEVICE AND SYSTEM FOR SUPPORTING TRANSPARENT PROXY IN A WIRELESS ACCESS GATEWAY**
VERFAHREN, VORRICHTUNG UND SYSTEM ZUR UNTERSTÜTZUNG EINES TRANSPARENTEN PROXYS IN EINEM GATEWAY MIT DRAHTLOSEM ZUGANG
PROCÉDÉ, DISPOSITIF ET SYSTÈME DE PRISE EN CHARGE D'UN MANDATAIRE TRANSPARENT DANS UNE PASSERELLE D'ACCÈS SANS FIL

(30) Priority: 29.06.2006 CN 200610094303
(43) Date of publication of application: 12.03.2008
(73) Proprietor: Huawei Technologies Co., Ltd., Shenzhen, Guangdong Province 518129 (CN)
(72) Inventor: DUAN, Haifeng, Guangdong 518129 (CN)
(74) Representative: Pfenning, Meinig & Partner GbR
(86) International application number: PCT/CN2007/070213
(87) International publication number: WO 2008/003269

(56) References cited:
- EP-A- 0 909 073
- WO-A-03/001756
- CN-A- 1 476 208
- CN-A- 1 592 278
- CN-A- 1 679 302
- CN-A- 1 968 227
- US-B1- 6 775 262
- XIONG C. ET AL.: 'The Structure And Bottleneck Of WAP Gateway' COMPUTER APPLICATION vol. 21, no. 3, March 2000, pages 22 - 24

## Description

This application claims the priority of CN Application No. 200610094303.X filed on June 29, 2006, titled "SYSTEM AND METHOD WITH A WIRELESS ACCESS GATEWAY SUPPORTING TRANSPARENT PROXY".

### Field of the Invention

The present invention relates to a communication system and a control method thereof, in particular, to a method, device and system with a wireless access gateway supporting transparent proxy in a communication system.

### Background of the Invention

With the construction of a new generation of wireless network by the operator, the number of users of the mobile data service increases rapidly. Based on the high-speed wireless access, abundant data services may be provided, including multimedia message service, download-type service, mail service and streaming media service, etc.

However, in the current mobile network, only the corresponding gateway device of specific services are defined, and these gateway devices only support the corresponding services. For example, for a Wireless Application Protocol (WAP) service, a corresponding WAP gateway device is defined, which only supports services based on WAP 1.X or WAP 2.0, including browse service, short message service and some other WAP-based services, such as multimedia message service, KJAVA download service, but does not support other types of services, such as mail service based on Mail Transfer Protocol (MTP) / Post Office Protocol 3 (POP3) / Interactive Mail Access Protocol (IMAP), streaming media service based on Real Time Transport Protocol (RTP) / Real Time Streaming Protocol (RTSP) / Real Time Control Protocol (RTCP), download service based on File Transfer Protocol (FTP).

Thus, when a service is carried out which cannot be supported by a corresponding gateway device, there is no corresponding entity in the operator network for the corresponding support and control, so that the operator is degraded to a simple channel provider, and cannot well control and manage the whole mobile value chain.

With the increase of the service type, the operator wants to define gateway devices corresponding to different services for a user to control and charge for the consumption of such services. In the prior art, for a terminal, to realize the access and charge of different services, the different IP addresses and ports of different gateway devices should be configured for different services, which is inconvenient for the user and the operator management and maintenance.

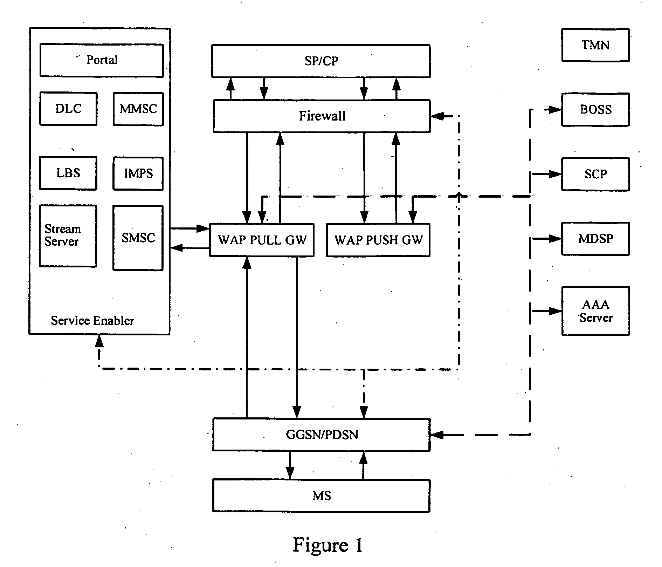

As shown in Figure 1, it shows a case in which an IP address and port of a WAP gateway device is configured when a terminal requests for a WAP service. It can be seen from Figure 1 that the communication network provides two WAP gateway devices, PULL gateway (WAP PULL GW) and PUSH gateway (WAP PUSH GW). For WAP service, the IP address and port number of the WAP gateway device are configured on a terminal (MS). When the terminal requests for a WAP service, the data stream of the WAP service is forwarded to the terminal by the above WAP gateway devices via network access devices such as GPRS Gateway Support Node/Packet Data Service Node (GGSN/PDSN). For non-WAP services, the traffic bill of the bearer layer is provided by the GGSN/PDSN, and the non-WAP traffic flow is sent to the corresponding application server by the network access device. With such a solution, for the non-WAP services, the operator cannot control the service. Meanwhile, the operator cannot charge for the content of the non-WAP value-added service.

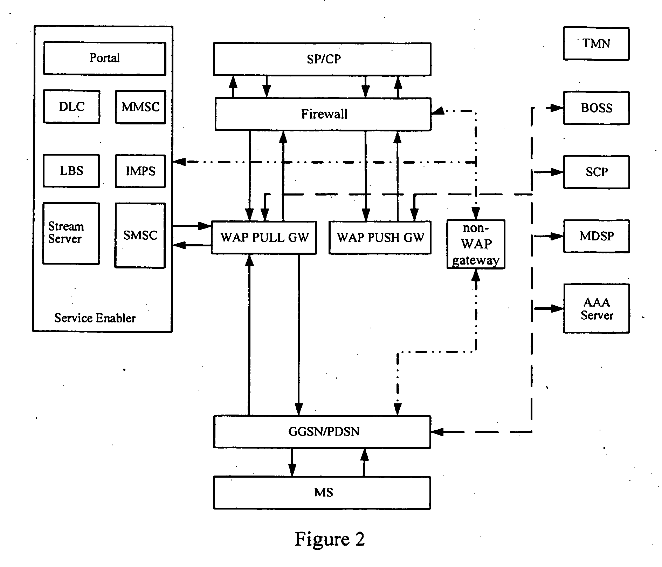

Regarding the issue that non-WAP service cannot be controlled and charged for as mentioned above, another architecture of the communication system as shown in Figure 2 is put forward. In this architecture of the communication system, different service gateways are disposed for different service types. In other words, two WAP gateway devices, WAP PULL GW and WAP PUSH GW, and a non-WAP gateway device are disposed. When a user makes use of different services, the IP addresses and ports of the gateway devices corresponding to these services should be configured on the terminal. If the user does not configure the IP addresses and ports of the gateway devices, the operator is not able to control and charge for the services used by the user.

Therefore, in the prior art, when a terminal requests for different types of services, the IP addresses and ports of the corresponding gateway devices should be configured; otherwise, the operator is not able to control the services requested by the terminal user. However, when the IP addresses and ports of many gateway devices are configured on the terminal, a negative experience may be brought about to the terminal user. Moreover, not all the terminals can provide the function of configuring the IP addresses and ports of gateway devices.
A patent document EP 0 909 073 discloses proxy reflection with a capability of "dual reflection", as a result, the proxy application is invisible to both parties of a connection. Another patent application WO 03/001756 discloses a method for implementing transparent gateway or proxy in a network using NAT transformation method in network devices adapting network address transformation method, thus a client and a server can communication with each other without recognizing the gateway though the gateway is provided on the network path.

### Summary of the Invention

The object of the present invention is to provide a method and a system which avoid the problem of the prior art.
The object is solved by the method of claim 1 and the system of claim 10.

The embodiments of the invention provides a method, device and system with a wireless access gateway supporting transparent proxy, by means of which a terminal may implement the access to various types of services without the necessity of configuring the addresses of the gateway devices corresponding to various types of services.

An embodiment of the invention provides a method for enabling a wireless access gateway to support transparent proxy, which includes :

receiving, by a routing device, an uplink packet sent by a terminal to a server, and forwarding the uplink packet to a gateway device corresponding to a service type of the uplink packet according to a correlation between the service type and a monitoring address and monitoring port of the gateway device;

performing, by the gateway device, a service processing on the uplink packet; and

obtaining, by the gateway device, a correlation between an address and port of the server and an address and port of the terminal in the uplink packet, and forwarding the uplink packet to the server via the routing device according to the correlation obtained.

The system with a wireless access gateway supporting transparent proxy according to an embodiment of the invention includes a terminal, a server, a routing device and a gateway device, wherein:

the routing device is adapted to forward an uplink packet sent to a server by a terminal to a gateway device corresponding to a service type of the uplink packet according to a correlation between the service type and a monitoring address and monitoring port of the gateway device and forward the uplink packet returned by the gateway device to the server; and forward a downlink packet sent to the terminal by the server to the gateway device according to a correlation between an address and port of the terminal, an address and port of the server in the uplink packet and the monitoring address and monitoring port of the gateway device, and forward the downlink packet returned by the gateway device to the terminal;

the gateway device is adapted to obtain a correlation between the address and port of the server and the address and port of the terminal in the uplink packet, return the uplink packet or the downlink packet received from the routing device to the routing device according to the correlation obtained, and perform a service processing on the uplink packet or the downlink packet.

An embodiment of the invention provides a device for enabling a wireless access gateway to support transparent proxy, which includes:

an uplink routing unit, which is adapted to forward an uplink packet sent to a server by a terminal to a gateway device corresponding to a service type of the uplink packet according to a correlation between the service type and a monitoring address and monitoring port of the gateway device, and forward the uplink packet returned by the gateway device to the server;

a routing storage unit, which is adapted to store a correlation between an address and port of the terminal, an address and port of the server in the uplink packet and the monitoring address and monitoring port of the gateway device; and

a downlink routing unit, which is adapted to forward the downlink packet sent to the terminal by the server to the gateway device according to the correlation stored in the routing storage unit, and forward the downlink packet returned by the gateway device to the terminal.

An embodiment of the invention further provides a gateway device, which includes:

a gateway storage unit, which is adapted to receive a correlation between an address and port of a terminal and an address and port of a server in an uplink packet notified by a routing device;

an uplink service unit, which is adapted to return the uplink packet from the routing device sent to the server by a terminal to the routing device according to the correlation, and perform a service processing on the uplink packet; and

a downlink service unit, which is adapted to return a downlink packet from the routing device sent to the terminal by the server to the routing device, and perform a service processing on the downlink packet.

In the embodiments of the invention, it is not necessary to configure the address of each corresponding gateway device on the terminal according to the service type requested, and the forwarding of a packet is implemented via the routing device. The packet needs to pass through the gateway device on its forwarding path, and then the forwarding of the packets is further accomplished. Therefore, the operation process is convenient, and the user experience is improved.

### Brief Description of the Drawings

Figure 1 is a schematic diagram showing the architecture of a communication system in the prior art;

Figure 2 is a schematic diagram showing another architecture of a communication system in the prior art;

Figure 3 is a schematic diagram showing the architecture of a system with a wireless access gateway supporting transparent proxy according to an embodiment of the invention;

Figure 4 is a flow chart of the method for enabling a wireless access gateway to support transparent proxy according to a first embodiment of the invention;

Figure 5 is a flow chart of the method for enabling a wireless access gateway to support transparent proxy according to a second embodiment of the invention; and

Figure 6 is a schematic diagram showing the structure of a routing device and a gateway device in the system with a wireless access gateway supporting transparent proxy according to an embodiment of the invention.

### Detailed Description of the Embodiments

In the embodiments of the invention, a routing device is arranged between a terminal and a gateway device, and the routing device makes an uplink packet or a downlink packet go through the corresponding gateway device. Therefore, the terminal may access various types of services without the necessity of configuring the IP address and port of each gateway device on the terminal.

The embodiments of the invention will now be further illustrated in conjunction with the drawings.

The system with a wireless access gateway supporting transparent proxy according to an embodiment of the invention includes a terminal, a network access device, a gateway device and a server. Furthermore, a routing device is configured between the gateway device and the network access device.

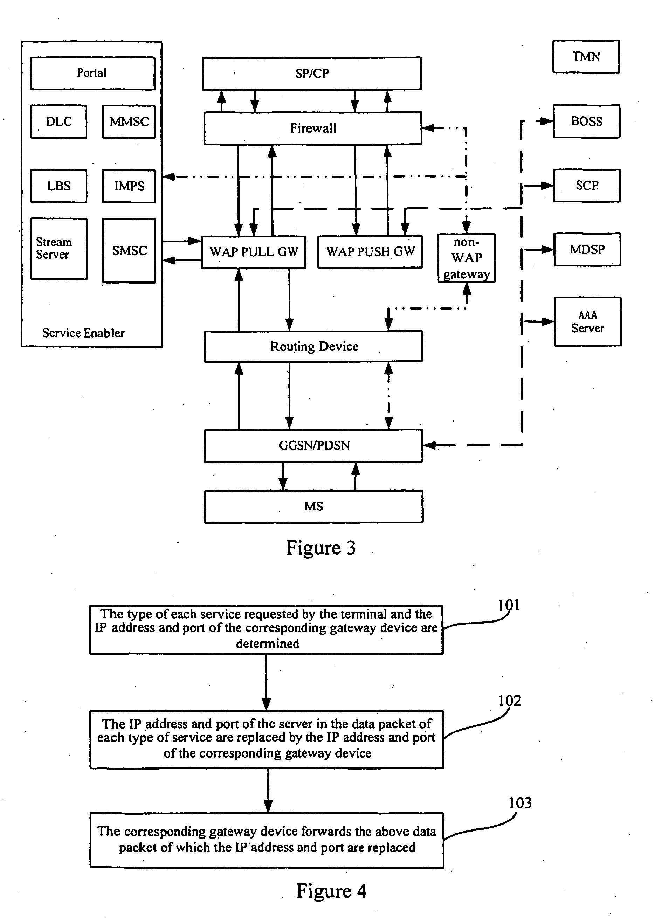

In Figure 3, a Service Provider/Content Provider (SP/CP) is the corresponding server from which a terminal (MS) requests various types of services.

WAP gateway devices, such as WAP PULL GW, WAP PUSH GW, and the non-WAP gateway device are the gateway devices corresponding to each service type. Each of the above gateway devices is connected with a service enabler, i.e. a Portal, a Download Service Center (DLC), Multimedia Messaging Service Center (MMSC), Location Based Service Server (LBS), Instant Messaging and Presence Service Server (IMPS), Stream Server and Short Message Service Center (SMSC), etc.

The GGSN/PDSN is a network access device. The GGSN/PDSN, WAP PULL GW and WAP PUSH GW are connected with Telecommunication Management Network (TMN), Business Operation Support System (BOSS), Service Control Point (SCP), Mobile Data Service Provider (MDSP) or Authentication Authorization Accounting server (AAA Server).

In the practical network architecture, a firewall for ensuring server security may also be configured between a server and a gateway device.

A routing device is configured between the network access device and the gateway device such as the WAP gateway device or the non-WAP gateway device. In the practical network architecture, the routing device may also be configured collectively in the network access device.

The above routing device may replace the IP address and port of the server in the data packet of each service type by the IP address and port of the corresponding gateway device according to the service type requested by the terminal.

The service type requested by the terminal may be distinguished according to the port number of the server used by the packet of the service; in other words, the service type requested may be determined according to the source port of the downlink packet or the destination port in the uplink packet.

For example, the service requested by the terminal is a Hyper Text Transfer Protocol (HTTP) service. As specified in the communication protocol, the server port used by this service is port 80. Therefore, if the destination port in the data packet is port 80, it may be determined that the service requested is an HTTP service. The server ports of different types of services are configurable, and one or more server ports may be configured for a service. For example, the port 80 and port 8080 may be configured for the HTTP service.

The services requested by the terminal correspond to the monitoring addresses and monitoring ports of different gateway devices; in other words, a correlation exists between the service type requested by the terminal and the monitoring address and monitoring port of the gateway device. Therefore, a correlation between the service type and the monitoring address and monitoring port of the gateway device may be preconfigured. For example, for the above HTTP service, the IP address of the gateway device corresponding to the service may be configured to be 192.168.0.1 and the port may be configured to be port 80. In another example, the service requested is an FTP service, so the IP address of the gateway device corresponding to the FTP service may be configured to be 192.168.0.100 and the port may be configured to be port 21. Additionally, a certain service may also be configured to be corresponding to a group of gateway devices, and the IP addresses and ports of the group of gateway devices corresponding to the service may be configured uniformly. The group of gateway devices may have an active/standby relation, or they may be a group of gateway devices configured for load balancing. When the correlation between the service and the monitoring address and monitoring port of the gateway device is determined, the corresponding gateway device may be found according to the service type.

According to the above determined correlation between the service type and the monitoring address and monitoring port of the gateway device, and in conjunction with the IP address and port of the server in the data packet, the routing device may replace the IP address and port of the server in the data packet by the IP address and port of the corresponding gateway device. Specifically, for an uplink data packet, the routing device replaces the destination IP address and port of the uplink data packet by the IP address and port of the corresponding gateway device. For a downlink data packet, the routing device replaces the source IP address and port of the downlink data packet by the IP address and port of the corresponding server.

For example, the service requested by the terminal is an FTP service, the IP address of the gateway device corresponding to the FTP service is 192.168.0.100, and the port is port 21. For an uplink data packet of the FTP service, the routing device may replace the destination IP address of the uplink data packet by the IP address of the corresponding gateway device 192.168.0.100, and replace the destination port of the uplink data packet by the port 21 of the corresponding gateway device. For a downlink data packet of the FTP service, the routing device may replace the source IP address of the downlink data packet by the IP address of the corresponding FTP server, and replace the source port of the downlink data packet by the port 21 of the corresponding FTP server.

When the destination IP address and port of the uplink data packet of the service are replaced by the IP address and port of the corresponding gateway device, or when the source IP address and port of the downlink data packet are replaced by the IP address and port of the corresponding server, the following correlation may be recorded by taking the IP address, port of the terminal and the layer-4 protocol number (such as TCP protocol number or UDP protocol number) as the key index: the correlation between the IP address and port of the terminal, the layer-4 protocol number, and the IP address and port of the server. Thus, a one-to-one correlation may be established among the IP address and port of the terminal, the layer-4 protocol number, the IP address and port of the server in the packet of the service requested by the terminal, and the monitoring IP address and monitoring port of the gateway device corresponding to the service requested by the terminal.

For the uplink data packet, the routing device routes the data packet, whose IP address and port are replaced, to the corresponding gateway device according to the IP address and port of the replaced data packet, i.e. the IP address and port of the corresponding gateway device. After detecting a connection request, the gateway device queries the correlation between the IP address, port and protocol number of the terminal and the IP address, port and protocol number of the server which sent the original request from the routing device, and then the gateway device forwards the data packet to the obtained IP address and port of the server.

For the downlink data packet, the gateway device forwards the data packet received to the routing device. After receiving the above downlink data packet, the routing device may search for the IP address and port of the corresponding server by taking the destination IP address and port in the packet, i.e. the IP address and port of the terminal, as a key index. Subsequently, the routing device replaces the source IP address and port in the downlink data packet by the IP address and port of the server that are found, and forwards the data packet to the corresponding terminal via a network access device.

In the system with a wireless access gateway supporting transparent proxy according to an embodiment of the invention, a terminal may implement a normal request service without the necessity of configuring the IP address and port of the gateway device corresponding to the service requested, so that the practical operation is facilitated, and the user experience is improved.

The invention further provides a method for enabling a wireless access gateway to support transparent proxy. A first embodiment of the method is as shown in Figure 4, which includes the following steps:

Block 101: The service type requested by the terminal and the IP address and port of the corresponding gateway device are determined.

In this process, the service type requested by the terminal may be distinguished according to the port number of the server used by the data packet of the service; in other words, the service type requested may be determined according to the source port of the downlink data packet or the destination port of the uplink data packet.

For example, the service requested by the terminal is a Hyper Text Transfer Protocol (HTTP) service. As specified in the communication protocol, the server port used by such service is port 80. Therefore, if the destination port in the data packet of a terminal is port 80, it can be determined that the service requested is an HTTP service. However, the server port of the service may also be configured by the user.

Each service type requested by the terminal user corresponds to the monitoring address and monitoring port of different gateway device. In other words, a correlation exists between the service type requested by the terminal user and the monitoring address and monitoring port of the gateway device. Therefore, a correlation between the service type and the monitoring address and monitoring port of the gateway device may be preconfigured. For example, for the above HTTP service, the IP address of the gateway device corresponding to the service may be configured to be 192.168.0.1 and the port may be configured to be port 80. In another example, the service requested is an FTP service, so the IP address of the gateway device corresponding to the FTP service may be configured to be 192.168.0.100 and the port may be configured to be port 21. Additionally, a certain service may also be configured to be corresponding to a group of gateway devices, and the IP addresses and ports of the group of gateway devices corresponding to the service may be configured uniformly. The group of gateway devices may have an active/standby relation, or they may be a group of gateway devices configured for load balancing. When the correlation between the service type and the monitoring address and monitoring port of the gateway device is determined, the corresponding gateway device may be found according to the service types.

Block 102: The IP address and port of the server in the uplink packet of the service are replaced by the IP address and port of the corresponding gateway device.

As described above, the correlation between of the service type and the monitoring address and monitoring port of the gateway device is determined. Meanwhile, in combination with the IP address and port of the server in the uplink packet, the IP address and port of the server in the uplink packet may be replaced by the IP address and port of the corresponding gateway device. Specifically, for an uplink data packet, the destination IP address and port of the uplink data packet may be replaced by the IP address and port of the corresponding gateway device.

For example, the service requested by the terminal is an FTP service, the IP address of the gateway device corresponding to the FTP service is 192.168.0.100, and the port is port 21. Thus, for the uplink packet of the FTP service, the destination IP address in the uplink packet may be replaced by the IP address 192.168.0.100 of the corresponding gateway device, and the destination port in the uplink packet may be replaced by port 21 of the corresponding gateway device.

After the destination IP address and port in the uplink packet of the service are replaced by the IP address and port of the corresponding gateway device, a correlation is established between the destination IP address and port in the uplink packet of the service and the IP address and port of the corresponding gateway device. Therefore, the above correlation may be recorded by taking the IP address and port of the terminal and the layer-4 protocol number as the key index. Thus, a one-to-one correlation is established among the IP address and port of the terminal, the layer-4 protocol number, and the IP address and port of the server in the packet of the service requested by the terminal, and the IP address and the port of the gateway device corresponding to the service requested by the terminal user.

Block 103: The corresponding gateway device forwards the data packet whose IP address and port are replaced.

For an uplink packet, the routing device routes the uplink packet, whose IP address and port are replaced, to the corresponding gateway device according to the replaced IP address and port of the uplink packet, i.e. the IP address and port of the corresponding gateway device. After receiving the uplink packet and detecting a connection request, the gateway device queries the correlation between the IP address, port and protocol number of the terminal and the IP address, port and protocol number of the server which sent the original request from the routing device, and then forwards the uplink packet to the IP address and port of the server obtained.

For a downlink data packet, the gateway device forwards the downlink packet received to the routing device. After receiving the downlink packet, the routing device may search for the IP address and port of the corresponding server by taking the destination IP address and port in the packet, i.e. the IP address and the port of the terminal, as the key index. Therefore, the routing device replaces the source IP address and port in the downlink packet by the IP address and port of the server obtained. Subsequently, the routing device forwards the data packet to the corresponding terminal via a network access device.

The method according to the first embodiment of the invention will now be illustrated. The process in which the data packet of a TCP link establishing request is processed and the process in which the data packet of a TCP link removing request is processed are taken as an example respectively. The method for processing the UDP-type service is similar to the method for processing the TCP-type service, so it will not be described again here.

When the data packet received by the gateway device is the data packet of a TCP connection establishing request, the gateway device forwards a link maintenance data packet generated by an operating system to a routing device. Then, the routing device replaces the source IP address and port in the link maintenance data packet by the IP address and port of the gateway device according to a correlation between the IP address and port of the terminal and the IP address and port of the server, and forwards the link maintenance data packet to the gateway device. After receiving the link maintenance data packet, the gateway device binds the local IP address and port, and initiates a TCP connection to the corresponding server according to the correlation between the IP address and port of the terminal and the IP address and port of the server. If the connection is established successfully, the local IP address and port bound to the gateway device are added to the above correlation. A correlation is established among the IP address and port of the gateway device, the IP address and port of the server, the IP address and port of the terminal and the layer-4 protocol number. The IP address and port bound to the gateway device is an IP address and port with a correlation with the connection, and is generated by the gateway device. The gateway device identifies the connection uniquely with the bound IP address and port.

When the data packet received by the gateway device is a TCP link removing request data packet, if the removing request is initiated by the terminal, the gateway device searches for the IP address and port of the corresponding server by taking the IP address and port of the terminal and the layer-4 protocol number as the key index, and removes the TCP connection between the terminal and the server. If the removing request is initiated by the server, the gateway device also searches for the IP address and port of the corresponding terminal according to the correlation among the IP address and port of the gateway device, the IP address and port of the server, and the IP address and port of the terminal, and removes the TCP connection between the server and the terminal.

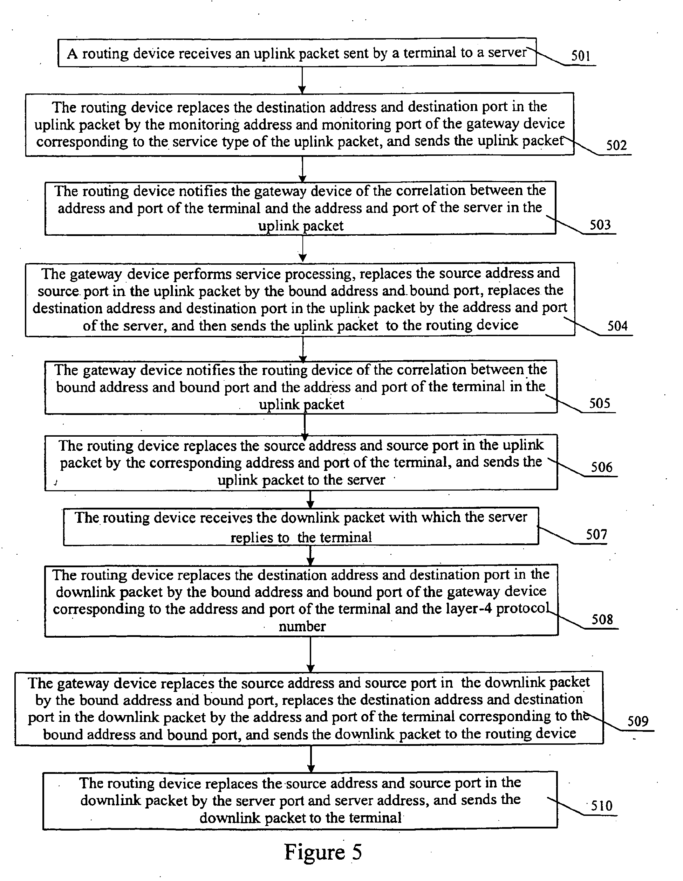

Figure 5 shows the process of the method for enabling a wireless access gateway to support transparent proxy according to a second embodiment of the invention, which indudes the following steps:

Block 501: A routing device receives an uplink packet sent by a terminal to a server. The source address and source port in the uplink packet are the address and port of the terminal, and the destination address and destination port are the address and port of the server.

Block 502: The routing device searches for a correlation between the service type and the monitoring address and monitoring port of the gateway device preconfigured locally according to the service type of the uplink packet, i.e. the destination port (port of the server) in the uplink packet, and determines the monitoring address and monitoring port of the gateway device. Then, the routing device replaces the destination address and destination port in the uplink packet by the monitoring address and monitoring port of the gateway device that are determined, and sends the uplink packet.

The routing device saves the correlation among the address and port of the terminal, the layer-4 protocol number, the address and port of the server in the uplink packet and the monitoring address and monitoring port of the gateway device. When an uplink packet from the terminal is received, if the same service type corresponds to the monitoring addresses and monitoring ports of a plurality of gateway devices, the routing device may further search for the record of the above correlation by taking the address and port of the terminal as well as the layer-4 protocol number as the index. If the record is found, the monitoring address and monitoring port of the corresponding gateway device are obtained; otherwise, the monitoring address and monitoring port of a gateway device corresponding to the service type are selected and saved according to a load allocation policy.

Block 503: The routing device notifies the gateway device of the correlation between the address and port of the terminal and the address and port of the server in the uplink packet. This process may also be combined with Block 502, and the routing device may notify the gateway device of the correlation between the address and port of the terminal and the address and port of the server in the uplink packet.

Because the routing device has replaced the destination address and destination port in the uplink packet by the monitoring address and monitoring port of the gateway device in Block 502, the gateway device needs to know the real destination address and destination port in the uplink packet, i.e. the address and port of the server, so that the gateway device may return the uplink packet to the routing device with the destination address after service processing is performed on the uplink packet. Meanwhile, the source address and source port in the uplink packet are the address and port of the terminal, and the different uplink packets of the same service type may be distinguished with the address and port of the terminal, thus in this embodiment, the routing device notifies the gateway device of the correlation between the address and port of the terminal and the address and port of the server.

Block 504: The uplink packet sent by the routing device in Block 502 is received by the gateway device, according to the current destination address and destination port, i.e. the monitoring address and monitoring port of the gateway device, in the uplink packet. The gateway device performs service processing according to the uplink packet. The service processing may include one or more of the processes of access authentication, access control and charging operation. The service processing may employ the similar method as that in the prior art, so it will not be described again here.

The correlation among the address and port of the terminal, the layer-4 protocol number, the address and port of the server in the uplink packet and the bound address and bound port of the gateway device generated by the gateway device is saved in the gateway device. For the uplink packet from the routing device, the gateway device searches for the record thereof in the above saved correlation by taking the address and port of the terminal and the layer-4 protocol number as the index. If the record does not exist, the gateway device generates and saves the corresponding bound address and bound port; otherwise, the gateway device obtains the corresponding bound address and bound port.

When the bound address and bound port are obtained, the gateway device replaces the source address and source port in the uplink packet by the bound address and bound port of the gateway device corresponding to the address and port of the terminal, and replaces the destination address and destination port in the uplink packet by the corresponding address and port of the server. The gateway device sends the uplink packet which has been replaced to the routing device.

Block 505: The gateway device notifies the routing device of the correlation between the bound address and bound port and the address and port of the terminal in the uplink packet. The routing device adds a correlation with the bound address and bound port of the gateway device to the correlation among the address and port of the terminal, the layer-4 protocol number, the address and port of the server in the uplink packet and the monitoring address and monitoring port of the gateway device.

In Blocks 503 and 505, the routing device and the gateway device may notify the opposite party of the correlation between the addresses and the ports using various protocols supported by both sides, as long as the correlation can reach the opposite party and be interpreted correctly. The protocols supported by both sides may be various existing protocols or a user defined protocol. For example, in this embodiment, when the TCP protocol is employed between the terminal and the server for exchanging an uplink packet or a downlink packet, an extended Common Open Policy Service Protocol (COPS protocol) may be employed between the routing device and the gateway device to notify the opposite party of the correlation between the addresses as well as between the ports.

Block 506: The routing device receives the uplink packet sent by the gateway device. The source address and source port in the uplink packet are the bound address and bound port of the gateway device. The routing device searches for the address and port of the terminal corresponding to the bound address and bound port of the gateway device in the correlation saved, replaces the source address and source port in the uplink packet by the corresponding address and port of the terminal, and sends the uplink packet to the server.

Thus, the source address and source port in the uplink packet received by the server are the address and port of the terminal, and the destination address and destination port are the address and port of the server. Therefore, the server does not perceive the existence of the gateway device.

Block 507: The server sends a downlink packet to the terminal as a response according to the uplink packet of the terminal. The source address and source port of the downlink packet sent by the server are the address and port of the server, and the destination address and destination port are the address and port of the terminal.

Block 508: The routing device receives the downlink packet sent by the server. The routing device searches for the bound address and bound port of the corresponding gateway device in the saved record by taking the address and port of the terminal and the layer-4 protocol number in the downlink packet as the index, and replaces the destination address and destination port in the downlink packet by the bound address and bound port of the gateway device that are found, and then sends the downlink packet.

Block 509: The gateways device receives the downlink packet whose destination address and destination port are the bound address and bound port of the gateway device, searches for the address and port of the terminal corresponding to the bound address and bound port in the saved correlation, and performs service processing on the downlink packet. Similar to the uplink packet, the service processing may include one or more of the processes of access authentication, access control and charging operation.

The gateway device replaces the source address and source port of the downlink packet by the bound address and bound port, replaces the destination address and destination port in the downlink packet by the corresponding address and port of the terminal, and sends the downlink packet to the routing device.

Block 510: The routing device receives the downlink packet returned by the gateway device, searches for the corresponding server port and server address by taking the address and port of the terminal and the layer-4 protocol number in the downlink packet as the index, replaces the source address and source port in the downlink packet by the address and port of the server, and sends the downlink packet after replacement to the terminal.

Thus, in the downlink packet received by the terminal, the address and port of the server are the source address and source port, and the address and port of the terminal are the destination address and destination port. Therefore, the terminal does not perceive the existence of the gateway device, either.

In this embodiment, the uplink packet and downlink packet may be a TCP packet or a UDP packet. For the TCP packet, after a TCP connection is established, address and port replacement may be performed directly for the uplink data packet of the TCP connection and the uplink control packet for removing the TCP connection according to the correlation saved for this connection in the routing device and the gateway device, without the necessity of saving a new correlation record. However, for the UDP packet, the routing device and the gateway device generate and save a new correlation record for each uplink UDP packet.

One of ordinary skill in the art may appreciate that part or all of the processes of the method according to the above embodiment of the invention may be implemented by instructing the related hardware via a program, and the program may be stored in a computer-readable storage medium. When the program runs, part or all of the processes of the method according to the above embodiment may be executed. The storage medium may be a read-only storage, a random access memory, a magnetic disc or a compact disc, etc.

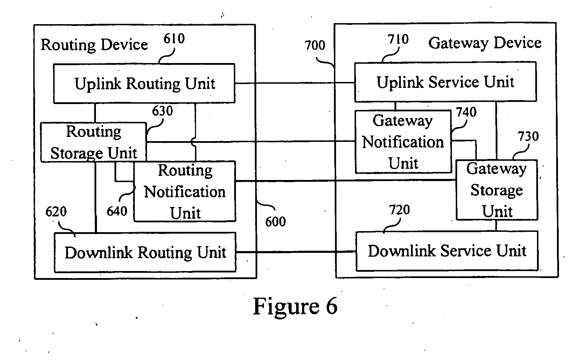

The routing device and the gateway device in the system with a wireless access gateway supporting transparent proxy according to the invention may have the structure as shown in Figure 6. The routing device 600 includes an uplink routing unit 610 and a downlink routing unit 620, and it may also include a routing storage unit 630 and a routing notification unit 640. The gateway device 700 includes an uplink service unit 710 and a downlink service unit 720, and it may also include a gateway storage unit 730 and a gateway notification unit 740.

For an uplink packet sent to the server by a terminal, the uplink routing unit 610 of the routing device 600 forwards the uplink packet to the gateway device 700 corresponding to the service type thereof. The uplink service unit 710 receives the uplink packet from the uplink routing unit 610, performs service processing, and returns the uplink packet to the routing device 600. The uplink routing unit 610 of the routing device 600 receives the uplink packet returned from the gateway device 700, and forwards the uplink packet to the server.

For the downlink packet returned to the terminal by the server, the downlink routing unit 620 of the routing device 600 forwards the downlink packet to the gateway device 700. The downlink service unit 720 of the gateway device 700 receives the downlink packet from the downlink routing unit 620, performs service processing and returns the downlink packet to the routing device 600. The downlink routing unit 620 of the routing device 600 receives the downlink packet returned from the gateway device 700, and forwards the downlink packet to the terminal.

For the routing device 600 and the gateway device 700 that apply the method according to the second embodiment of the method, the routing device 600 may also include a routing storage unit 630 and a routing notification unit 640, the uplink routing unit 610 may further include a first uplink conversion module and a second uplink conversion module, and the downlink routing unit 620 may further include a first downlink conversion module and a second downlink conversion module. The gateway device 700 may also include a gateway storage unit 730 and a gateway notification unit 740, the uplink service unit 710 may further include an uplink conversion module, and the downlink service unit 720 may further include a downlink conversion module.

The uplink routing unit 610 of the routing device 600 receives an uplink packet sent to the server by the terminal, and the first uplink conversion module of the uplink routing unit 610 replaces the destination address and destination port in the uplink packet by the monitoring address and monitoring port of the gateway device 700 corresponding to the service type thereof, and forwards the uplink packet which has been replaced. The first uplink conversion module saves a correlation among the address and port of the terminal, the layer-4 protocol number, the address and port of the server, and the monitoring address and monitoring port of the gateway device 700 in the uplink packet in the routing storage unit 630. If the same service type corresponds to monitoring addresses and monitoring ports of a plurality of gateway devices, for the uplink packet in a TCP connection after it is established, the first uplink conversion module searches for the monitoring address and monitoring port of the corresponding gateway device in the routing storage unit 630 by taking the address and port of the terminal and the layer-4 protocol number in the uplink packet as the index, and replaces the destination address and destination port in the uplink packet by the monitoring address and monitoring port that are found.

The routing notification unit 640 of the routing device 600 obtains the correlation between the address and port of the terminal and the address and port of the server in the uplink packet from the routing storage unit 630, and sends the correlation to the gateway device 700. The gateway storage unit 730 of the gateway device 700 receives and saves the correlation sent by the routing device 600.

The uplink service unit 710 of the gateway device 700 receives an uplink packet from the routing device 600, the source address and source port in the uplink packet are the address and port of the terminal, and the destination address and destination port are the local monitoring address and monitoring port. The uplink conversion module of the uplink service unit 710 generates the local bound address and bound port corresponding to the address and port of the terminal and the layer-4 protocol number for the uplink packet, and adds the corresponding local bound address and bound port, layer-4 protocol number and so on to the correlation between the address and port of the terminal and the address and port of the server in the uplink packet saved in the gateway storage unit 730. The uplink conversion module replaces the source address and source port in the uplink packet by the bound address and bound port, replaces the destination address and destination port in the uplink packet by the corresponding address and port of the server, and sends the uplink packet which has been replaced to the routing device 600. For the TCP packet in a TCP connection after the TCP connection is established, the uplink conversion module searches for the local bound address and bound port corresponding to the address and port of the terminal and the layer-4 protocol number in the gateway storage unit 730 to perform address and port replacement, without the necessity of generating a new local bound address and bound port.

The uplink conversion module of the uplink service unit 710 outputs a correlation between the local bound address and bound port and the address and port of the terminal generated for the uplink packet to the gateway notification unit 740. The gateway notification unit 740 sends the correlation to the routing device 600. The routing storage unit 630 of the routing device 600 receives the bound address and bound port of the gateway device 700, and adds them to the correlation record of the address and port of the terminal.

The uplink routing unit 610 of the routing device 600 receives the uplink packet returned from the gateway device 700, wherein the source address and source port are the bound address and bound port of the gateway device 700, and the destination address and destination port are the address and port of the server. The second uplink conversion module of the uplink routing unit 610 searches for the address and port of the terminal corresponding to the bound address and bound port in the uplink packet in the routing storage unit 630, replaces the source address and source port in the uplink packet by the corresponding address and port of the terminal, and sends the uplink packet which has been replaced to the server.

The downlink routing unit 620 of the routing device 600 receives a downlink packet returned to the terminal by the server, and the first downlink conversion module searches for the bound address and bound port of the gateway device corresponding to the address and port of the terminal and the layer-4 protocol number in the routing storage unit 630, replaces the destination address and destination port in the downlink packet by the bound address and bound port of the gateway device 700, and sends the downlink packet which has been replaced to the gateway device 700.

The downlink service unit 720 of the gateway device 700 receives a downlink packet from the routing device 600. In the downlink packet, the source address and source port are the address and port of the server, and the destination address and destination port are the local bound address and bound port. The downlink conversion module of the downlink service unit 720 searches for the address and port of the terminal corresponding to the local bound address and bound port in the gateway storage unit 730, replaces the destination address and destination port in the downlink packet by the address and port of the terminal, replaces the source address and source port by the local bound address and bound port, and sends the downlink packet which has been replaced to the routing device 600.

The downlink routing unit 620 of the routing device 600 receives a downlink packet returned by the gateway device 700. The second downlink conversion module of the downlink routing unit 620 searches for the corresponding address and port of the server in the routing storage unit 630 according to the address and port of the terminal and the layer-4 protocol number in the downlink packet, replaces the source address and source port in the downlink packet by the address and port of the server, and sends the downlink packet which has been replaced to the terminal.

As described above, the routing device 600 may be an independent device, and it may also be integrated in a network access device.

According to each of the above embodiments of the invention, the IP address of the corresponding gateway device does not need to be configured on a terminal according to the service type requested. Instead, a routing device implements the replacement between the IP address and port of the server and the IP address and port of the gateway device, and further implements the forwarding of data. Because the IP address of each gateway device does not need to be configured on the terminal, the gateway device may be regarded as invisible for the terminal. In other words, a transparent proxy of the terminal access service may be realized. Moreover, the service data requested by the terminal passes through the corresponding gateway device, so the gateway device may implement the service control, and the charging for the traffic and content.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims.

## Claims

1. A method for enabling a wireless access gateway to support transparent proxy comprises the steps of:
Receiving (501), by a routing device, an uplink packet sent by a terminal to a server, wherein the source address and source port in the uplink packet are the address and port of the terminal, and the destination address and destination port are the address and port of the server;
replacing (502), by the routing device, the destination address and destination port in the uplink packet by the monitoring address and monitoring port of a gateway device corresponding to a service type of the uplink packet, and sending the uplink packet to the gateway device;
notifying (503), by the routing device, the gateway device of a correlation between the address and port of the terminal and the address and port of the server in the uplink packet;
Performing (504), by the gateway device, a service processing on the uplink packet;
generating (504), by the gateway device, a bound address and bound port, replacing the source address and source port in the uplink packet by the bound address and bound port of the gateway device, replacing the destination address and destination port in the uplink packet by the address and port of the server, and sending the uplink packet to the routing device;
notifying (505), by the gateway device, the routing device of a correlation between the bound address and bound port of the gateway device and the address and port of the terminal; and
replacing (506), by the routing device, the source address and source port in the uplink packet by the address and port of the terminal, and sending the uplink packet to the server.

2. The method according to claim 1, **characterized in that** the method further comprises:
recording, by the routing device, a correlation between the address and port of the terminal, the address and port of the server and the monitoring address and monitoring port of the gateway device.

3. The method according to claim 2, **characterized in that** the method further comprises:
receiving, by the routing device, a downlink packet returned by the server to the terminal, and forwarding, by the routing device, the downlink packet to the gateway device according to the correlation recorded;
performing, by the gateway device, a service processing on the downlink packet; and
forwarding, by the gateway device, the downlink packet to the terminal via the routing device according to the correlation between the address and port of the server and the address and port of the terminal.

4. The method according to claim 3, **characterized in that** the routing device saves a correlation which further comprises a correlation among the address and port of the terminal, the layer-4 protocol number, the address and port of the server, the monitoring address and monitoring port of the gateway device, and the bound address and bound port of the gateway device; and
the process of forwarding, by the routing device, the downlink packet to the gateway device comprises: replacing, by the routing device, the destination address and destination port in the downlink packet by the bound address and bound port of the gateway device, and sending the downlink packet which has been replaced, wherein the bound address and bound port of the gateway device corresponds to the address and port of the terminal and the layer-4 protocol number in the downlink packet.

5. The method according to claim 3, **characterized in that** the process of forwarding, by the gateway device, the downlink packet to the terminal via the routing device comprises:
replacing, by the gateway device, the source address and source port in the downlink packet by the bound address and bound port, replacing the destination address and destination port in the downlink packet by the address and port of the terminal corresponding to the bound address and bound port, and sending the downlink packet which has been replaced to the routing device; and
replacing, by the routing device, the source address and source port in the downlink packet by the address and port of the server, and sending the downlink packet which has been replaced, wherein the address and port of the server correspond to the address and port of the terminal in the downlink packet.

6. The method according to claim 2, **characterized in that** the process of performing, by the gateway device, the service processing on the uplink packet comprises: performing, by the gateway device, an access authentication, an access control and/or a charging operation according to the uplink packet.

7. The method according to claim 3, **characterized in that** the process of performing, by the gateway device, the service processing on the downlink packet comprises: performing, by the gateway device, an access authentication, an access control and/or a charging operation according to the downlink packet.

8. The method according to claim 3, **characterized in that** the uplink packet is a Transfer Control Protocol packet or a User Datagram Protocol packet; and the downlink packet is a Transfer Control Protocol packet or a User Datagram Protocol packet.

9. The method according to claim 1, **characterized in that** the routing device is integrated in a network access device.

10. A system with a wireless access gateway supporting transparent proxy, comprises a routing device and a gateway device, wherein
the routing device is adapted to receive an uplink packet sent to a server by a terminal, wherein the source address and source port in the uplink packet are the address and port of the terminal, and the destination address and destination port are the address and port of the server;
the routing device is further adapted to replace the destination address and destination port in the uplink packet by the monitoring address and monitoring port of a gateway device corresponding to a service type of the uplink packet, send the uplink packet to the gateway device, and notify the gateway device of a correlation between the address and port of the terminal and the address and port of the server in the uplink packet;
the gateway device is adapted to perform a service processing on the uplink packet, replace the source address and source port in the uplink packet by a bound address and bound port of the gateway device, replace the destination address and destination port in the uplink packet by the address and port of the server, send the uplink packet to the routing device, and notify the routing device of a correlation between the bound address and bound port of the gateway device and the address and port of the terminal; and
the routing device is further adapted to replace the source address and source port in the uplink packet by the address and port of the terminal, and send the uplink packet to the server.

11. The system according to claim 10, **characterized in that** the routing device further comprises:
a routing storage unit, which is adapted to store a correlation between an address and port of the terminal, an address and port of the server in the uplink packet and the monitoring address and monitoring port of the gateway device; and
a downlink routing unit, which is adapted to forward a downlink packet sent to the terminal by the server to the gateway device according to the correlation stored in the routing storage unit, and forward the downlink packet returned by the gateway device to the terminal.

12. The system according to claim 11, **characterized in that** the source address and source port in the downlink packet returned by the gateway device are the bound address and bound port of the gateway device; and
the downlink routing unit comprises:
a first downlink conversion module, which is adapted to replace the destination address and destination port in the downlink packet sent by the server to the terminal by the bound address and bound port of the gateway device, wherein the bound address and bound port of the gateway device correspond to the address and port of the terminal and the layer-4 protocol number in the downlink packet, and forward the downlink packet; and
a second downlink conversion module, which is adapted to replace the source address and source port in the downlink packet returned by the gateway device by the address and port of the server corresponding to the address and port of the terminal in the downlink packet, and then forward the downlink packet.

## Patentansprüche

1. Verfahren, um es einem drahtlosen Zugangs-Gateway zu ermöglichen, transparentes Proxy zu unterstützen, mit den folgenden Schritten:
Empfangen (501) eines durch ein Endgerät zu einem Server gesendeten Aufwärtsstreckenpakets durch eine Routing-Einrichtung, wobei die Quellenadresse und der Quellenport in dem Aufwärtsstreckenpaket die Adresse und der Port des Endgeräts sind und die Zieladresse und der Zielport die Adresse und der Port des Servers sind;
Ersetzen (502) der Zieladresse und des Zielports in dem Aufwärtsstreckenpaket durch die Überwachungsadresse und den Überwachungsport einer Gateway-Einrichtung, die einem Diensttyp des Aufwärtsstreckenpakets entspricht, durch die Routing-Einrichtung und Senden des Aufwärtsstreckenpakets zu der Gateway-Einrichtung;
Benachrichtigen (503) der Gateway-Einrichtung durch die Routing-Einrichtung über eine Korrelation zwischen der Adresse und dem Port des Endgeräts und der Adresse und dem Port des Servers in dem Aufwärtsstreckenpaket;
Durchführen (504) einer Dienstverarbeitung an dem Aufwärtsstreckenpaket durch die Gateway-Einrichtung;
Erzeugen (504) einer gebundenen Adresse und eines gebundenen Ports durch die Gateway-Einrichtung, Ersetzen der Quellenadresse und des Quellenports in dem Aufwärtsstreckenpaket durch die gebundene Adresse und den gebundenen Port der Gateway-Einrichtung, Ersetzen der Zieladresse und des Zielports in dem Aufwärtsstreckenpaket durch die Adresse und den Port des Servers und Senden des Aufwärtsstreckenpakets zu der Routing-Einrichtung;
Benachrichtigen (505) der Routing-Einrichtung über eine Korrelation zwischen der gebundenen Adresse und dem gebundenen Port der Gateway-Einrichtung und der Adresse und dem Port des Endgeräts durch die Gateway-Einrichtung; und
Ersetzen (506) der Quellenadresse und des Quellenports in dem Aufwärtsstreckenpaket durch die Adresse und den Port des Endgeräts durch die Routing-Einrichtung und Senden des Aufwärtsstreckenpakets zu dem Server.

2. Verfahren nach Anspruch 1, **dadurch gekennzeichnet, dass** das Verfahren ferner Folgendes umfasst:
Aufzeichnen einer Korrelation zwischen der Adresse und dem Port des Endgeräts, der Adresse und dem Port des Servers und der Überwachungsadresse und dem Überwachungsport der Gateway-Einrichtung durch die Routing-Einrichtung.

3. Verfahren nach Anspruch 2, **dadurch gekennzeichnet, dass** das Verfahren ferner Folgendes umfasst:
Empfangen eines von dem Server an das Endgerät zurückgegebenen Abwärtsstreckenpakets durch die Routing-Einrichtung und Weiterleiten des Abwärtsstreckenpakets durch die Routing-Einrichtung zu der Gateway-Einrichtung gemäß der aufgezeichneten Korrelation;
Durchfiihren einer Dienstverarbeitung an dem Abwärtsstreckenpaket durch die Gateway-Einrichtung; und
Weiterleiten des Abwärtsstreckenpakets durch die Gateway-Einrichtung zu dem Endgerät über die Routing-Einrichtung gemäß der Korrelation zwischen der Adresse und dem Port des Servers und der Adresse und dem Port des Endgeräts.

4. Verfahren nach Anspruch 3, **dadurch gekennzeichnet, dass** die Routing-Einrichtung eine Korrelation abspeichert, die ferner eine Korrelation zwischen der Adresse und dem Port des Endgeräts, der Schicht-4-Protokollnummer, der Adresse und dem Port des Servers, der Überwachungsadresse und dem Überwachungsport der Gateway-Einrichtung und der gebundenen Adresse und dem gebundenen Port der Gateway-Einrichtung umfasst; und
der Prozess des Weiterleitens des Abwärtsstreckenpakets durch die Routing-Einrichtung zu der Gateway-Einrichtung Folgendes umfasst: Ersetzen der Zieladresse und des Zielports in dem Abwärtsstreckenpaket durch die gebundene Adresse und den gebundenen Port der Gateway-Einrichtung durch die Routing-Einrichtung und Senden des Abwärtsstreckenpakets, das ersetzt wurde, wobei die gebundene Adresse und der gebundene Port der Gateway-Einrichtung der Adresse und dem Port des Endgeräts und der Schicht-4-Protokollnummer in dem Abwärtsstreckenpaket entsprechen.

5. Verfahren nach Anspruch 3, **dadurch gekennzeichnet, dass** der Prozess des Weiterleitens des Abwärtsstreckenpakets durch die Gateway-Einrichtung zu dem Endgerät über die Routing-Einrichtung Folgendes umfasst:
Ersetzen der Quellenadresse und des Quellenports in dem Abwärtsstreckenpaket durch die gebundene Adresse und den gebundenen Port durch die Gateway-Einrichtung, Ersetzen der Zieladresse und des Zielports in dem Abwärtsstreckenpaket durch die Adresse und den Port des Endgeräts, die der gebundenen Adresse und dem gebundenen Port entsprechen, und Senden des Abwärtsstreckenpakets, das ersetzt wurde, zu der Routing-Einrichtung; und
Ersetzen der Quellenadresse und des Quellenports in dem Abwärtsstreckenpaket durch die Adresse und den Port des Servers durch die Routing-Einrichtung und Senden des Abwärtsstreckenpakets, das ersetzt wurde, wobei die Adresse und der Port des Servers der Adresse und dem Port des Endgeräts in dem Abwärtsstreckenpaket entsprechen.

6. Verfahren nach Anspruch 2, **dadurch gekennzeichnet, dass** der Prozess des Durchführens der Dienstverarbeitung an dem Aufwärtsstreckenpaket durch die Gateway-Einrichtung Folgendes umfasst:
Durchführen einer Zugangsauthentifikations-, einer Zugangskontroll- und/oder einer Vergebührungsoperation durch die Gateway-Einrichtung gemäß dem Aufwärtsstreckenpaket.

7. Verfahren nach Anspruch 3, **dadurch gekennzeichnet, dass** der Prozess des Durchführens der Dienstverarbeitung an dem Abwärtsstreckenpaket durch die Gateway-Einrichtung Folgendes umfasst:
Durchführen einer Zugangsauthentifikations-, einer Zugangskontroll- und/oder einer Vergebührungsoperation durch die Gateway-Einrichtung gemäß dem Abwärtsstreckenpaket.

8. Verfahren nach Anspruch 3, **dadurch gekennzeichnet, dass** das Aufwärtsstreckenpaket ein Paket des Transfer Control Protocol oder ein Paket des User Datagram Protocol ist; und das Abwärtsstreckenpaket ein Paket des Transfer Control Protocol oder ein Paket des User Datagram Protocol ist.

9. Verfahren nach Anspruch 1, **dadurch gekennzeichnet, dass** die Routing-Einrichtung in eine Netzwerkzugangseinrichtung integriert ist.

10. System mit einem drahtlosen Zugangs-Gateway, das transparentes Proxy unterstützt, umfassend eine Routing-Einrichtung und eine Gateway-Einrichtung, wobei die Routing-Einrichtung dafür ausgelegt ist, ein durch ein Endgerät zu einem Server gesendetes Aufwärtsstreckenpaket zu empfangen, wobei die Quellenadresse und der Quellenport in dem Aufwärtsstreckenpaket die Adresse und der Port des Endgeräts sind und die Zieladresse und der Zielport die Adresse und der Port des Servers sind; die Routing-Einrichtung ferner dafür ausgelegt ist, die Zieladresse und den Zielport in dem Aufwärtsstreckenpaket durch die Überwachungsadresse und den Überwachungsport einer Gateway-Einrichtung zu ersetzen, die einem Diensttyp des Aufwärtsstreckenpakets entspricht, das Aufwärtsstreckenpaket zu der Gateway-Einrichtung zu senden und die Gateway-Einrichtung über eine Korrelation zwischen der Adresse und dem Port des Endgeräts und der Adresse und dem Port des Servers in dem Aufwärtsstreckenpaket zu benachrichtigen;
die Gateway-Einrichtung dafür ausgelegt ist, eine Dienstverarbeitung an dem Aufwärtsstreckenpaket durchzuführen, die Quellenadresse und den Quellenport in dem Aufwärtsstreckenpaket durch eine gebundene Adresse und einen gebundenen Port der Gateway-Einrichtung zu ersetzen, die Zieladresse und den Zielport in dem Aufwärtsstreckenpaket durch die Adresse und den Port des Servers zu ersetzen, das Aufwärtsstreckenpaket zu der Routing-Einrichtung zu senden und die Routing-Einrichtung über eine Korrelation zwischen der gebundenen Adresse und dem gebundenen Port der Gateway-Einrichtung und der Adresse und dem Port des Endgeräts zu benachrichtigen; und
die Routing-Einrichtung ferner dafür ausgelegt ist, die Quellenadresse und den Quellenport in dem Aufwärtsstreckenpaket durch die Adresse und den Port des Endgeräts zu ersetzen und das Aufwärtsstreckenpaket zu dem Server zu senden.

11. System nach Anspruch 10, **dadurch gekennzeichnet, dass** die Routing-Einrichtung ferner Folgendes umfasst:
eine Routing-Speichereinheit, die dafür ausgelegt ist, eine Korrelation zwischen einer Adresse und einem Port des Endgeräts, einer Adresse und einem Port des Servers in dem Aufwärtsstreckenpaket und der Überwachungsadresse und dem Überwachungsport der Gateway-Einrichtung zu speichern; und
eine Abwärtsstrecken-Routing-Einheit, die dafür ausgelegt ist, ein durch den Server zu dem Endgerät gesendetes Abwärtsstreckenpaket gemäß der in der Routing-Speichereinheit gespeicherten Korrelation zu der Gateway-Einrichtung weiterzuleiten und das durch die Gateway-Einrichtung zurückgegebene Abwärtsstreckenpaket zu dem Endgerät weiterzuleiten.

12. System nach Anspruch 11, **dadurch gekennzeichnet, dass** die Quellenadresse und der Quellenport in dem durch die Gateway-Einrichtung zurückgegebenen Abwärtsstreckenpaket die gebundene Adresse und der gebundene Port der Gateway-Einrichtung sind; und
die Abwärtsstrecken-Routing-Einheit Folgendes umfasst:
ein erstes Abwärtsstrecken-Umsetzungsmodul, das dafür ausgelegt ist, die Zieladresse und den Zielport in dem durch den Server zu dem Endgerät gesendeten Abwärtsstreckenpaket durch die gebundene Adresse und den gebundenen Port der Gateway-Einrichtung zu ersetzen, wobei die gebundene Adresse und der gebundene Port der Gateway-Einrichtung der Adresse und dem Port des Endgeräts und der Schicht-4-Protkollnummer in dem Abwärtsstreckenpaket entsprechen, und das Abwärtsstreckenpaket weiterzuleiten; und
ein zweites Abwärtsstrecken-Umsetzungsmodul, das dafür ausgelegt ist, die Quellenadresse und den Quellenport in dem durch die Gateway-Einrichtung zurückgegebenen Abwärtsstreckenpaket durch die Adresse und den Port des Servers zu ersetzen, die der Adresse und dem Port des Endgeräts in dem Abwärtsstreckenpaket entsprechen, und dann das Abwärtsstreckenpaket weiterzuleiten.

## Revendications

1. Procédé d'activation d'une passerelle d'accès sans fil pour prendre en charge un mandataire transparent et comprenant les étapes consistant à :
recevoir (501), par un dispositif de routage, un paquet montant envoyé par un terminal à un serveur, où l'adresse source et le port source dans le paquet montant sont l'adresse et le port du terminal, et l'adresse de destination et le port de destination sont l'adresse et le port du serveur ;
remplacer (502), par le dispositif de routage, l'adresse de destination et le port de destination dans le paquet montant par l'adresse de contrôle et le port de contrôle d'un dispositif de passerelle correspondant à un type de service du paquet montant, et
envoyer le paquet montant au dispositif de passerelle ;
notifier (503), par le dispositif de routage, le dispositif de passerelle d'une corrélation entre l'adresse et le port du terminal et l'adresse et le port du serveur dans le paquet montant ;
effectuer (504), par le dispositif de passerelle, un traitement de service sur le paquet montant ;
générer (504), par le dispositif de passerelle, une adresse liée et un port lié, remplacer l'adresse source et le port source dans le paquet montant par l'adresse liée et le port lié du dispositif de passerelle, remplacer l'adresse de destination et le port de destination dans le paquet montant par l'adresse et le port du serveur, et envoyer le paquet montant au dispositif de routage ;
notifier (505), par le dispositif de passerelle, le dispositif de routage d'une corrélation entre l'adresse liée et le port lié du dispositif de passerelle et l'adresse et le port du terminal ; et
remplacer (506), par le dispositif de routage, l'adresse source et le port source dans le paquet montant par l'adresse et le port du terminal, et envoyer le paquet montant au serveur.

2. Procédé selon la revendication 1, **caractérisé en ce qu'**il comprend en outre l'étape consistant à :
enregistrer, par le dispositif de routage, une corrélation entre l'adresse et le port du terminal, l'adresse et le port du serveur et l'adresse de contrôle et le port de contrôle du dispositif de passerelle.

3. Procédé selon la revendication 2, **caractérisé en ce qu'**il comprend en outre les étapes consistant à :
recevoir, par le dispositif de routage, un paquet descendant retourné par le serveur au terminal, et renvoyer, par le dispositif de routage, le paquet descendant au dispositif de passerelle conformément à la corrélation enregistrée ;
effectuer, par le dispositif de passerelle, un traitement de service sur le paquet descendant ; et
renvoyer, par le dispositif de passerelle, le paquet descendant au terminal via le dispositif de routage conformément à la corrélation entre l'adresse et le port du serveur et l'adresse et le port du terminal.

4. Procédé selon la revendication 3, **caractérisé en ce que** le dispositif de routage enregistre une corrélation qui comprend en outre une corrélation parmi l'adresse et le port du terminal, le numéro de protocole de couche 4, l'adresse et le port du serveur, l'adresse de contrôle et le port de contrôle du dispositif de passerelle, et l'adresse liée et le port lié du dispositif de passerelle ; et
le processus de renvoi, par le dispositif de routage, du paquet descendant au dispositif de passerelle comprend les étapes consistant à : remplacer, par le dispositif de routage, l'adresse de destination et le port de destination dans le paquet descendant par l'adresse liée et le port lié du dispositif de passerelle, et envoyer le paquet descendant qui a été remplacé, où l'adresse liée et le port lié du dispositif de passerelle correspondent à l'adresse et au port du terminal et au numéro de protocole de couche 4 dans le paquet descendant.

5. Procédé selon la revendication 3, **caractérisé en ce que** le processus de renvoi, par le dispositif de passerelle, du paquet descendant au terminal via le dispositif de routage comprend les étapes consistant à :
remplacer, par le dispositif de passerelle, l'adresse source et le port source dans le paquet descendant par l'adresse liée et le port lié, remplacer l'adresse de destination et le port de destination dans le paquet descendant par l'adresse et le port du terminal correspondant à l'adresse liée et au port lié, et envoyer le paquet descendant qui a été remplacé au dispositif de routage ; et
remplacer, par le dispositif de routage, l'adresse source et le port source dans le paquet descendant par l'adresse et le port du serveur, et envoyer le paquet descendant qui a été remplacé, où l'adresse et le port du serveur correspondent à l'adresse et au port du terminal dans le paquet descendant.

6. Procédé selon la revendication 2, **caractérisé en ce que** le processus consistant à effectuer, par le dispositif de passerelle, le traitement de service sur le paquet montant comprend l'étape consistant à effectuer, par le dispositif de passerelle, une authentification d'accès, un contrôle d'accès et/ou une opération de taxation conformément au paquet montant.

7. Procédé selon la revendication 3, **caractérisé en ce que** le processus consistant à effectuer, par le dispositif de passerelle, le traitement de service sur le paquet descendant comprend l'étape consistant à effectuer, par le dispositif de passerelle, une authentification d'accès, un contrôle d'accès et/ou une opération de taxation conformément au paquet descendant.

8. Procédé selon la revendication 3, **caractérisé en ce que** le paquet montant est un paquet de protocole de contrôle de transfert TCP ou un paquet de protocole de datagramme utilisateur UDP ; et le paquet descendant est un paquet de protocole de contrôle de transfert TCP ou un paquet de protocole de datagramme utilisateur UDP.

9. Procédé selon la revendication 1, **caractérisé en ce que** le dispositif de routage est intégré dans un dispositif d'accès au réseau.

10. Système avec passerelle d'accès sans fil prenant en charge un mandataire transparent comprenant un dispositif de routage et un dispositif de passerelle, dans lequel :
le dispositif de routage est adapté pour recevoir un paquet montant envoyé par un terminal à un serveur, où l'adresse source et le port source dans le paquet montant sont l'adresse et le port du terminal, et l'adresse de destination et le port de destination sont l'adresse et le port du serveur ;
le dispositif de routage est en outre adapté pour remplacer l'adresse de destination et
le port de destination dans le paquet montant par l'adresse de contrôle et le port de contrôle d'un dispositif de passerelle correspondant à un type de service du paquet montant, envoyer le paquet montant au dispositif passerelle, et notifier le dispositif de passerelle d'une corrélation entre l'adresse et le port du terminal et l'adresse et le port du serveur dans le paquet montant ;
le dispositif de passerelle est adapté pour effectuer un traitement de service sur le paquet montant, remplacer l'adresse source et le port source dans le paquet montant par une adresse liée et un port lié du dispositif de passerelle, remplacer l'adresse de destination et le port de destination dans le paquet montant par l'adresse et le port du serveur, envoyer le paquet montant au dispositif de routage, et notifier le dispositif de routage d'une corrélation entre l'adresse liée et le port lié du dispositif de passerelle et l'adresse et le port du terminal ; et
le dispositif de routage est en outre adapté pour remplacer l'adresse source et le port source dans le paquet montant par l'adresse et le port du terminal, et envoyer le paquet montant au serveur.

11. Système selon la revendication 10, **caractérisé en ce que** le dispositif de routage comprend en outre :
une unité de stockage de routage, qui est adaptée pour stocker une corrélation entre une adresse et un port du terminal, une adresse et un port du serveur dans le paquet montant et l'adresse de contrôle et le port de contrôle du dispositif de passerelle ; et
une unité de routage descendant, qui est adaptée pour renvoyer un paquet descendant envoyé au terminal par le serveur au dispositif de passerelle conformément à la corrélation stockée dans l'unité de stockage de routage, et renvoyer le paquet descendant retourné par le dispositif de passerelle au terminal.

12. Système selon la revendication 11, **caractérisé en ce que** l'adresse source et le port source dans le paquet descendant retourné par le dispositif de passerelle sont l'adresse liée et le port lié du dispositif de passerelle ; et
l'unité de routage de liaison descendante comprend :
un premier module de conversion de liaison descendante, qui est adapté pour remplacer l'adresse de destination et le port de destination dans le paquet descendant envoyé par le serveur au terminal par l'adresse liée et le port lié du dispositif de passerelle, où l'adresse liée et le port lié du dispositif de passerelle correspondent à l'adresse et au port du terminal et au numéro de protocole de couche 4 dans le paquet descendant ; et pour renvoyer le paquet descendant ; et
un second module de conversion de liaison descendante, qui est adapté pour remplacer l'adresse source et le port source dans le paquet descendant retourné par le dispositif de passerelle par l'adresse et le port du serveur correspondant à l'adresse et au port du terminal dans le paquet descendant ; puis renvoyer le paquet descendant.
